# EUROPEAN PATENT APPLICATION

(11) **EP 4 667 082 A1**
(43) Date of publication of application: **24.12.2025**
(21) Application number: 23922939.6
(22) Date of filing: 19.12.2023
(51) Int. Cl.: B01D 53/04, B01J 20/16, B01J 20/18, B01J 20/20, B01J 20/22, B01J 20/26, B01J 20/34

(54) **GAS ABSORPTION/DESORPTION UNIT AND GAS ABSORPTION/DESORPTION DEVICE**

(30) Priority: 17.02.2023 JP 2023023660
(71) Applicant: NGK Insulators, Ltd., Nagoya-shi, Aichi 467-8530 (JP)
(72) Inventor: NAKATANI,Takahiko, Nagoya-shi, Aichi 467-8530 (JP); MIYAIRI,Yukio, Nagoya-shi, Aichi 467-8530 (JP)
(74) Representative: Mewburn Ellis LLP
(86) International application number: PCT/JP2023/045533
(87) International publication number: WO 2024/171606

(57) **Abstract**

Provided are a gas adsorption/desorption unit and a gas adsorption/desorption device, in which a gas absorbent can be more easily and evenly heated. A gas adsorption/desorption unit 2 according to this invention includes: one or more first honeycomb structures 20 including at least one honeycomb structure portion 25 having an outer peripheral wall 250 and partition walls 251 provided on an inner side of the outer peripheral wall 250, the partition walls 251 defining a plurality of cells 251a each extending from one end face to other end face of the honeycomb structure portion 25 to form a flow path, and a pair of electrode layers 26 disposed on the outer peripheral wall 250 or the end faces of the honeycomb structure portion 25; and electrode terminals 21 connected to the pair of electrode layers 26, wherein at least one honeycomb structure portion 25 of the one or more first honeycomb structures 20 includes a gas adsorbent 27 and is made of a material having a PTC property.

## Description

### FIELD OF THE INVENTION

This invention relates to a gas adsorption/desorption unit and gas adsorption/desorption device for adsorbing and desorbing gases.

### BACKGROUND OF THE INVENTION

For example, a direct air recovery (DAC) method, which directly recovers gases such as carbon dioxide (CO₂)from the air, is known. In DAC, gases are adsorbed on a gas adsorbent that selectively adsorbs gases having specific components, and the gases are desorbed from the gas adsorbent for recovery. Conventional configurations for adsorption and desorption of such gases can be found in the following Patent Literature 1.

Patent Literature 1 describes a temperature swing adsorption method for separating fluid mixtures containing at least a first fluid component and a second fluid component. The fluid mixture is introduced into an adsorption separation system provided with a parallel path adsorbent contacting device. The parallel path adsorbent contacting device includes: a plurality of parallel fluid flow paths oriented in a first axial direction between its inlet and outlet ends; cell walls located between the fluid flow paths including at least one adsorbent material; and a plurality of axially oriented and axially continuous thermally conductive filaments that are in direct contact with at least one adsorbent material. Heat derived from the adsorption heat of the fluid components on the adsorbent material and heat in desorbing the fluid components adsorbed on the adsorbent material are transferred by the heat conductive filaments.

### CITATION LIST

### Patent Literatures

[Patent Literature 1] Japanese Patent No. 5904420 B

### SUMMARY OF THE INVENTION

For efficiently desorbing the gas from the gas adsorbent, the entire gas adsorbent is required to be uniformly heated at a predetermined temperature (e.g., a temperature required to desorb CO₂ from amine is about 100°C).

In order to uniformly heat the adsorbent material using thermally conductive filaments as in Patent Literature 1, the thermally conductive filaments must be densely arranged in the support, and it is not easy to introduce a means for bringing electrical conduction for these thermally conductive filaments.

This invention has been made to solve the problems as described above, and one of its objects is to provide a gas adsorption/desorption unit and a gas adsorption/desorption device capable of more easily and uniformly heating a gas adsorbent.

Aspect 1. In an embodiment, this invention relates to a gas adsorption/desorption unit comprising: one or more first honeycomb structures including at least one honeycomb structure portion having an outer peripheral wall and partition walls provided on an inner side of the outer peripheral wall, the partition walls defining a plurality of cells each extending from one end face to other end face of the honeycomb structure portion to form a flow path, and a pair of electrode layers disposed on the outer peripheral wall or the end faces of the honeycomb structure portion; and electrode terminals connected to the pair of electrode layers, wherein at least one honeycomb structure portion of the one or more first honeycomb structures comprises a gas adsorbent and is made of a material having a PTC property.

Aspect 2. This invention may relate to the gas adsorption/desorption unit according to Aspect 1, wherein the gas adsorption/desorption unit comprises the honeycomb structure portion, and further comprises one or more second honeycomb structures provided on a downstream side of the one or more first honeycomb structures in a flow direction of a gas passing through the cells of the one or more first honeycomb structures, and wherein at least one honeycomb structure portion of the one or more second honeycomb structures comprises a gas adsorbent.

Aspect 3. This invention may relate to the gas adsorption/desorption unit according to Aspect 2, wherein the one or more second honeycomb structures do not have electrode layers or do not connect electrode terminals.

Aspect 4. This invention may relate to the gas adsorption/desorption unit according to Aspect 2 or 3, wherein the at least one honeycomb structure portion of the one or more second honeycomb structures is made of a material having an NTC property.

Aspect 5. This invention may relate to the gas adsorption/desorption unit according to any one of Aspects 1 to 4, wherein the material having the PTC property comprises barium titanate.

Aspect 6. This invention may relate to the gas adsorption/desorption unit according to Aspect 4 or Aspect 5 depending from Aspect 4, wherein the material having the NTC property comprises at least one selected from the group of cordierite, silicon carbide, silicon, silicic acid and alumina.

Aspect 7. This invention may relate to the gas adsorption/desorption unit according to any one of Aspects 1 to 6, wherein the gas adsorbent comprises at least one selected from the group consisting of nitrogen-containing compounds, porous organic cages, polystyrene, metal-organic frameworks, metal oxides, graphene, activated carbon, nitrogen doped carbon, alkali compounds, carbonates, bicarbonates, zeolite, amorphous alumina silicates, ionic liquids, or combinations thereof.

Aspect 8. This invention may relate to the gas adsorption/desorption unit according to any one of Aspects 1 to 7, wherein the gas adsorbent is present inside the outer peripheral wall, inside the partition walls and/or inside the cells.

Aspect 9. This invention may relate to the gas adsorption/desorption unit according to Aspect 8, wherein the gas adsorbent is present inside the cells, the cells comprise: first cells plugged at the other end face; second cells plugged at the one end face; and third cells provided between the first cells and the second cells and filled with the gas adsorbent, and the gas adsorption/desorption unit is configured so that the gas flowing into the first cells from the one end face passes through the partition walls and the third cells to reach the second cells, and flows out through the second cells from the other end face.

Aspect 10: This invention relates to a gas adsorption/desorption device comprising the gas adsorption/desorption unit according to any one of Aspects 1 to 9 and a power source circuit connected to the electrode terminals, wherein the gas adsorption/desorption device is configured to be able to heat the honeycomb structure by passing a current through the electrode terminals when desorbing a gas from the gas adsorbent.

Aspect 11. This invention may relate to the gas adsorption/desorption device according to Aspect 10, wherein the gas adsorption/desorption device comprises a gas adsorbent, and further comprises a gas adsorption member provided between the first honeycomb structures.

According to an embodiment of the gas adsorption/desorption unit and the gas adsorption/desorption device, at least one honeycomb structure portion of one or more first honeycomb structures contains a gas adsorbent and is made of a material having a PTC property, so that the gas adsorbent can be more easily and evenly heated.

### BRIEF DESCRIPTION OF THE DRAWINGS

FIG. 1 is an explanatory view illustrating a gas adsorption/desorption device according to an embodiment of this invention;
FIG. 2 is a perspective view illustrating the gas adsorption/desorption unit in FIG. 1;
FIG. 3 is a cross-sectional view of an end face of the first honeycomb structure in FIG. 2;
FIG. 4 is a perspective view illustrating a variation of the gas adsorption/desorption unit in FIG. 2;
FIG. 5 is a perspective view illustrating an example of an arrangement of a first honeycomb structure in the gas adsorption/desorption unit in FIG. 1;
FIG. 6 is a perspective view illustrating a variation of the gas adsorption/desorption unit in FIG. 5;
FIG. 7 is an explanatory view illustrating a variation of the gas adsorption/desorption device in FIG. 1;
FIG. 8 is an explanatory view illustrating a first example of a present mode of a gas adsorbent in the first honeycomb structure in FIG. 2;
FIG. 9 is a front view of the cells in FIG. 8;
FIG. 10 is an explanatory view illustrating a second example of a present mode of a gas adsorbent in the first honeycomb structure in FIG. 2;
FIG. 11 is an explanatory view illustrating a third example of a present mode of a gas adsorbent in the first honeycomb structure in FIG. 2;
FIG. 12 is a front view illustrating an example of a first honeycomb structure for implementing the present mode of the gas adsorbent in FIG. 11; and
FIG. 13 is a front view illustrating another example of a first honeycomb structure for implementing the present mode of the gas adsorbent in FIG. 11.

### DETAILED DESCRIPTION OF THE INVENTION

Hereinafter, embodiments of the invention will be specifically described with reference to the drawings. The invention is not limited to each embodiment, and components can be modified and embodied without departing from the spirit of the invention. Further, various inventions can be formed by appropriately combining a plurality of components disclosed in each embodiment. For example, some components may be removed from all of the components shown in the embodiments. Furthermore, the components of different embodiments may be optionally combined.

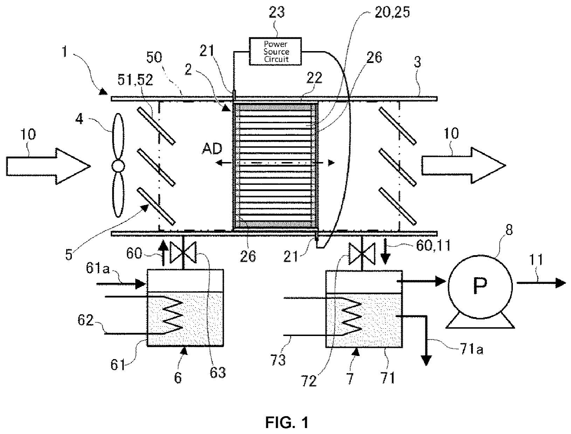

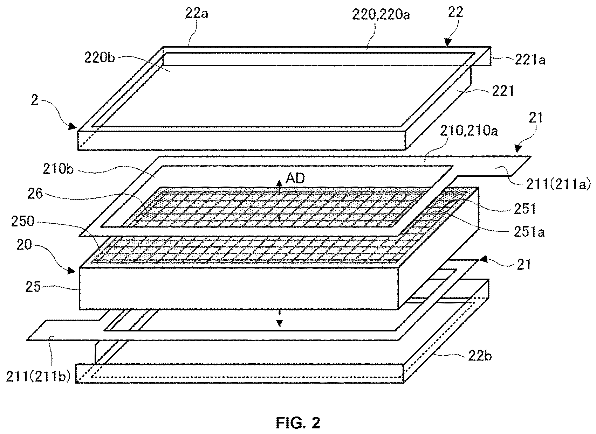

FIG. 1 is an explanatory view illustrating a gas adsorption/desorption device 1 according to an embodiment of this invention, and FIG. 2 is a perspective view illustrating a gas adsorption/desorption unit 2 in FIG. 1. The gas adsorption/desorption device 1 and the gas adsorption/desorption unit 2 illustrated in FIGS. 1 and 2 are for adsorbing and desorbing a gas 11, which is part of components, from a mixed gas 10 containing multiple components. Typically, the mixed gas 10 is atmospheric air and the gas 11 to be adsorbed and desorbed is a carbon dioxide gas. The gas adsorption/desorption device 1 and the gas adsorption/desorption unit 2 according to this embodiment can be used for recovering the carbon dioxide (CO₂) gas from the atmospheric air.

As illustrated in FIG. 1, the gas adsorption/desorption device 1 includes a gas adsorption/desorption unit 2, a housing 3, a fan 4, a damper 5, a water vapor feeder 6, a gas separator 7, and a vacuum pump 8.

The gas adsorption/desorption unit 2 is for adsorbing and desorbing the gas 11 as a part of the components from the mixed gas 10 as described above. The gas adsorption/desorption unit 2 may have one or more first honeycomb structures 20, electrode terminals 21, a case 22, and a power source circuit 23.

The first honeycomb structure 20 has a honeycomb structure portion 25 and a pair of electrode layers 26. As illustrated in FIG. 2, the honeycomb structure portion 25 has an outer peripheral wall 250 and partition walls 251 provided on an inner side of the outer peripheral wall 250, the partition walls 251 defining a plurality of cells 251a, each of the cells 2511a extending from one end face to other end face of the honeycomb structure portion 25 to form a flow path. The outer shape of the honeycomb structure 25 may be pillar-shaped. The pillar shape is understandable as a three-dimensional shape having a given thickness in an axial direction AD (see FIGS. 1 and 2). The axial direction AD can be the extending direction of the cells 251a. A ratio of the axial length of the honeycomb structure portion 25 to the diameter or width of the end face of the honeycomb structure 25 (aspect ratio) is arbitrary. The pillar shape may include a shape (flat shape) in which the axial length of the honeycomb structure portion 25 is shorter than the diameter or width of the end face. The outer shape of the honeycomb structure portion 25 can include, but not limited to, a pillar shape with quadrangular end faces (quadrangular pillar shape), a pillar shape with circular or oval end faces, a pillar shape with polygonal end faces (triangular, pentagonal, hexagonal, heptagonal, octagonal, etc.) with less or more corners on the end faces, as shown in FIG. 2.

The shape of each cell 251a is not particularly limited, but it may be polygonal such as triangular, quadrangular, pentagonal, hexagonal, heptagonal, and octagonal, circular, or oval in the cross section of the first honeycomb structure 20 orthogonal to the central axial direction. Preferably, it may be polygonal.

The thickness of the partition walls 251 may preferably be 0.05 to 0.50 mm, and more preferably 0.10 to 0.45 mm in terms of ease of production. For example, the thickness of the partition walls 251 of 0.05 mm or more improves the strength of the first honeycomb structure 20, and the thickness of 0.50 mm or less reduces the pressure loss. The thickness of the partition walls 251 is an average value measured by the method of microscopic observation of the cross-section in the central axial direction.

The porosity of the partition walls 251 is preferably 20 to 70%. The porosity of the partition walls 251 is preferably 20% or more in terms of ease of production, and when it is 70% or less, the strength of the first honeycomb structure 20 can be maintained.

The partition walls 251 preferably has an average pore size of 2 to 30 µm, and more preferably 5 to 25 µm. The average pore diameter of the partition walls 251 of 2 µm or more may lead to easy production, and the average pore diameter of 30 µm or less can ensure the strength of the first honeycomb structure 20. As used herein, the terms "average pore size" and "porosity" refer to the average pore size and porosity measured by mercury intrusion technique.

The cells 251a preferably has a density in the range of 5 to 150 cells/cm², more preferably in the range of 5 to 100 cells/cm², and even more preferably in the range of 31 to 80 cells/cm², although not particularly limited thereto.

Such a honeycomb structure 25 is produced by forming a green body containing ceramic raw materials into a honeycomb shape having partition walls 251 that extend from one end face to the other end face and define a plurality of cells 251a as fluid flow paths to form a honeycomb formed body, and then drying and firing the honeycomb formed body. The outer peripheral wall 250 may be an outer peripheral wall 250 extruded integrally with the honeycomb formed body, or after the honeycomb formed body is formed or fired, the outer periphery of the honeycomb formed body or honeycomb sintered body is ground to a predetermined shape, and a coating material is applied to the honeycomb formed body or honeycomb sintered body whose outer periphery has been ground to form an outer peripheral coating, which may be used as the outer peripheral wall 250 (in this case, only the outer peripheral coating becomes the peripheral wall 250). Also, without being ground the outer peripheral wall 250 extruded integrally with the honeycomb formed body, an outer peripheral coating may be formed on the outer peripheral wall 250 (the outer peripheral wall 250 has a two layer structure of the outer peripheral wall such as the honeycomb sintered body and the outer peripheral coating).

The first honeycomb structure 20 is not limited to the integral first honeycomb structure 20 in which the partition walls 251 are integrally formed, and it may be, for example, a first honeycomb structure 20 (joined honeycomb structure) having a structure in which a plurality of pillar shaped honeycomb segments, each having a plurality of cells 251a as fluid flow paths defined by ceramic partition walls 251 are combined together via joining material layers.

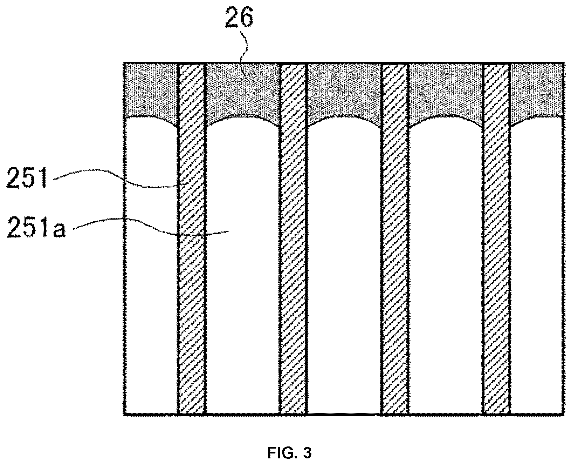

The pair of electrode layers 26 are disposed on the outer peripheral wall 250 or end faces of the honeycomb structure portion 25. FIGS. 1 to 3 illustrate the end faces of the honeycomb structure portion 25, more specifically the electrode layers 26 disposed on the both end faces of the honeycomb structure portion 25. In FIGS. 1 to 3, the electrode layers 26 are represented by hatching. As shown in FIG. 3, the electrode layers 26 may extend not only to the end faces of the honeycomb structure portion 25 but also into the interior of the cells 251a. The electrode layers 26 may be understood to be provided at the ends of the honeycomb structure 25. The electrode layers 26 are attached to the surfaces of the partition walls 251 in the interior of the cells 251a. The electrode layers 26 do not have to plug the cells 251a.

The electrode layers 26 are layers provided to facilitate the flow of electricity. The volume resistivity of the electrode layers 26 is preferably 1/200 or more and 1/10 or less of the volume resistivity of the honeycomb structure portion 25. The electrode layers 26 can be made of conductive ceramics, metal, or a composite material of metal and conductive ceramics (cermet). Examples of the metal include single metals of Cr, Fe, Co, Ni, Si, or Ti, or alloys containing at least one metal selected from the group consisting of these metals. The conductive ceramics includes, but are not limited to, silicon carbide (SiC) and metal compounds such as metal silicides, such as tantalum silicide (TaSi₂) and chromium silicide (CrSi₂).

The electrode terminals 21 are connected to the pair of electrode layers 26, respectively. The electrode terminals 21 may be connected to the electrode layers 26 by being placed in contact with the electrode layers 26 disposed at the end faces of the honeycomb structure 25. Although FIG. 2 illustrates an embodiment in which one electrode terminal 21 is provided on one honeycomb structure portion 25, one electrode terminal 21 may be provided across a plurality of honeycomb structure portions 25.

As particularly shown in FIG. 2, the electrode terminal 21 may have a terminal body 210 and an extending portion 211.

The terminal body 210 can be disposed to contact the electrode layer 26 disposed at the end face of the honeycomb structure 25. The terminal body 210 may be a frame-shaped body with the same shape as the outer shape of one or more honeycomb structure portions 25. When the outer shape of the honeycomb structure portion 25 is circular, the terminal body 210 may be annular. The terminal body 210 may have one or more band bodies 210a that form a frame-shaped or annular bodies as a whole. When one electrode terminal 21 is provided across a plurality of honeycomb structure portions 25, the band body 210a may form a break for each honeycomb structure portion 25. The terminal body 210 may have one or more through holes 210b therein.

The extending portion 211 is drawn out from the terminal body 210. Although FIG. 2 shows a mode in which the extending portion 211 is drawn from a corner portion of the rectangular terminal body 210, the extending portion 211 may be drawn from a middle position between the corner portions of the terminal body 210. The extending portion 211 (first extending portion 211a) of the electrode terminal 21 disposed at one end face of the honeycomb structure portion 25 and the extending portion 211 (second extending portion 211b) of the electrode terminal 21 disposed at the other end face of the honeycomb structure portion 25 may be drawn in different directions as shown in FIG. 2, or may be drawn in the same direction. When the first extending portion 211a and the second extending portion 211b are drawn in different directions, the first extending portion 211a and the second extending portion 211b may be disposed symmetrically with each other so that the central axis of the honeycomb structure portion 25 is sandwiched therebetween. When the gas adsorption/desorption unit 2 is viewed along the axial direction AD, it is preferable that the first extending portion 211a and the second extending portion 211b are disposed apart from each other so as not to overlap with each other.

The case 22 surrounds one or more first honeycomb structures 20 and the electrode terminals 21. The case 22 is preferably composed of an insulator. The case 22 may have an end wall 220 that is overlapped with the end face of the first honeycomb structure 20, and a peripheral wall 221 that is overlapped with the outer peripheral wall 250 of the first honeycomb structure 20. The end wall 220 may be a frame-shaped body or an annular body. The end wall 220 may have one or more band bodies 220a that form a frame-shaped body or annular body as a whole. When one case 22 surrounds a plurality of honeycomb structure portions 25, the band bodies 220a may form a break between the honeycomb structure sections 25. The end wall 220 may have one or more through holes 220b therein. The peripheral wall 221 may be provided with a notch 221a for drawing out the extending portion 211. The case 22 may have a first case body 22a that is overlapped with one end face of the honeycomb structure 25 and a second case body 22b that is overlapped with the other end face of the honeycomb structure 25.

As illustrated in FIG. 1, the power source circuit 23 is connected to the electrode terminals 21. More specifically, the power source circuit 23 is connected to the extending portion 211 of the electrode terminal 21. Although FIG. 1 shows the extending portion 211 as being drawn out to the outside of the housing 3, the wiring from the power source circuit 23 may be drawn into the housing 3.

Electric power from the power source circuit 23 is supplied to the first honeycomb structure 20 through the electrode terminals 21. The gas adsorption/desorption unit 2 is configured so that the first honeycomb structure 20 can be heated by electrical conduction through the electrode terminals 21. One of the pair of electrode terminals 21 are treated as an anode and the other as a cathode.

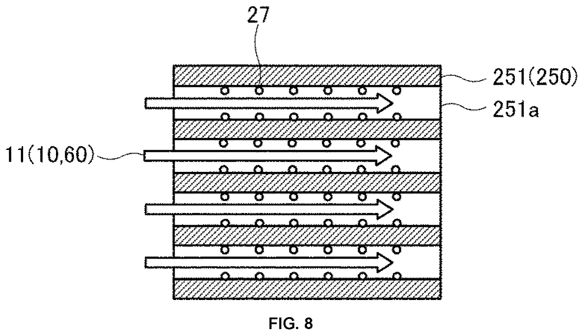

Here, at least one honeycomb structure portion 25 of the one or more first honeycomb structures 20 according to this embodiment contains a gas adsorbent 27 and is made of a material having a PTC property (more specifically, a ceramic material having a PTC property). The gas adsorbent 27 is illustrated in FIG. 8 and the like described later. Heating of the first honeycomb structure 20 can be performed when the gas 11 is desorbed from the gas adsorbent 27.

For efficiently desorbing the gas 11 from the gas adsorbent 27, the entire gas adsorbent 27 is required to be uniformly heated at a predetermined temperature (e.g., a temperature required to desorb CO₂ from amine is about 100°C). In order to uniformly heat the gas adsorbent 27 using thermally conductive filaments as in Patent Literature 1 described above, the thermally conductive filaments must be densely arranged in the first honeycomb structure 20, and it is not easy to introduce a means for bringing electrical conduction through these thermally conductive filaments.

The PTC property described above refers to a property of increasing electrical resistance as a temperature increases. In other words, after heating of the first honeycomb structure 20 is started by electrical conduction, the electrical resistance of the first honeycomb structure 20 increases as the temperature of the first honeycomb structure 20 rises, thereby limiting the electrical conduction through the first honeycomb structure 20. This allows the entire first honeycomb structure 20 to be increased to a predetermined temperature and to be maintained at the predetermined temperature. As a result, the gas adsorption/desorption unit 2 and the gas adsorption/desorption device 1 according to this embodiment can heat the gas adsorbent 27 more easily and evenly than the case where the thermal conductive filaments are densely arranged in the first honeycomb structure 20 as in the conventional configuration as described above.

From the viewpoints of being able to generate heat by electrical conduction and of having the PTC property, the first honeycomb structure 20 is preferably ceramics made of a material containing barium titanate (BaTiO₃)-based crystals as a main component in which a part of Ba is substituted with a rare earth element. As used herein, the term "main component" means a component in which a proportion of the component is more than 50% by mass of the total component. The content of BaTiO₃-based crystalline particles can be determined by fluorescent X-ray analysis, EDAX (energy dipersive X-ray) spectroscopy, or the like. Other crystalline particles can be measured in the same manner as this method.

The compositional formula of BaTiO₃-based crystalline particles, in which a part of Ba is substituted with the rare earth element, can be expressed as (Ba₁₋ₓAₓ)TiO₃. In the compositional formula, the symbol A represents at least one rare earth element, and 0.001 ≤ x ≤ 0.010.

The symbol A is not particularly limited as long as it is the rare earth element, but it may preferably be one or more selected from the group consisting of Sc, Y, La, Ce, Pr, Nd, Eu, Gd, Dy, Ho, Er, and Yb, and more preferably La. The x value is preferably 0.001 or more, more preferably 0.0015 or more, and even more preferably 0.002 or more, in terms of suppressing excessively high electrical resistance at room temperature. On the other hand, x is preferably 0.010 or less, more preferably 0.009 or less, and even more preferably 0.008 or less, in terms of preventing the electrical resistance at room temperature from becoming too high due to insufficient sintering.

In the BaTiO₃ crystal grains in which part of Ba has been substituted with the rare earth element, a ratio (Ba + rare earth element) / Ti is preferably 1.005 to 1.050. By controlling the ratio (Ba + rare earth element) / Ti to this range, the electrical resistance at room temperature can be stably reduced. The element ratios of Ba, rare earth elements and Ti can be determined, for example, by X-ray fluorescence analysis, ICP-MS (inductively coupled plasma mass spectrometry) or the like.

The BaTiO₃ crystal grains in which part of the Ba has been substituted with the rare earth element preferably have an average crystal grain size of 5 to 200 µm, more preferably 5 to 180 µm, and even more preferably 5 to 160 µm. By controlling the crystal grain size to this range, the electrical resistance at room temperature can be stably reduced.

The average crystal grain size of the BaTiO₃ crystal grains can be measured as follows. A 5 mm x 5mm x 5 mm square sample is cut out from the ceramics and embedded in a resin. The embedded sample is mirror-polished by mechanical polishing and observed by SEM. The SEM observation is performed, for example, using a model S-3400 N manufactured by Hitachi High-Tech Corporation, at an acceleration voltage of 15 kV and at magnifications of 3000. In an SEM observation image (30 µm long × 45 µm wide), four straight lines, each having a thickness 0.3 µm, are drawn across the entire vertical direction of the field of view at 10 µm intervals, and the number of BaTiO₃-based crystal grains through which any part of the straight lines pass is counted. The length of the straight line is divided by the number of BaTiO₃ crystal grains, and the average of the values obtained from four or more positions of the SEM observation image is determined to be the average crystal grain size.

The content of the BaTiO₃-based crystal grains in which part of Ba is substituted with the rare earth element in the ceramics is not particularly limited as long as it is determined to be the main component, but it may preferably be 90% by mass or more, and more preferably 92% by mass or more, and even more preferably 94% by mass or more. The upper limit of the content of the BaTiO₃-based crystal grains is not particularly limited, but it may generally be 99% by mass, and preferably 98% by mass.

The content of BaTiO₃-based crystal grains can be measured by fluorescent X-ray analysis, or EDAX (energy dipersive X-ray) spectroscopy. Other crystalline particles can be measured in the same manner as this method.

The ceramic used for the first honeycomb structure 20 preferably contains Ba₆Ti₁₇O₄₀ crystal grains. The presence of Ba₆Ti₁₇O₄₀ crystal grains in the ceramic can reduce electrical resistance at room temperature. Although the invention is not intended to be limited by theory, it is believed that the Ba₆Ti₁₇O₄₀ crystal grains become liquid during the firing process to promote rearrangement, grain growth, and densification of the BaTiO₃-based crystal grains, thereby reducing the electrical resistance at room temperature.

The content of Ba₆Ti₁₇O₄₀ crystal grains in the ceramic is 1.0 to 10.0% by mass, preferably 1.2 to 8.0% by mass, and more preferably 1.5 to 6.0% by mass. The Ba₆Ti₁₇O₄₀ crystal grains of 1.0% or more allows the effect due to the presence of the Ba₆Ti₁₇O₄₀ crystal grains (that is, the effect of reducing the electrical resistance at room temperature) to be obtained. Furthermore, the Ba₆Ti₁₇O₄₀ crystal grains of 10.0% by mass or less allows the PTC property to be ensured.

The ceramic used for the first honeycomb structure 20 may further contain BaCO₃ crystal grains. The BaCO₃ crystal grains are derived from BaCO₃ powder, which is a raw material for ceramics.

The BaCO₃ crystal grains have a little effect on the electrical resistance of the ceramic at room temperature, so that they may not be contained in the ceramic. However, if the content of BaCO₃ crystal grains in the ceramic is too high, it may affect the electrical resistance at room temperature, and the amounts of other crystal grains may decrease, making it difficult to obtain the desired characteristics. Therefore, the content of BaCO₃ crystal grains is preferably 2.0% by mass or less, more preferably 1.8% by mass or less, and even more preferably 1.5% by mass or less. The lower limit of the content of the BaTiO₃-based crystal grains is not particularly limited, but it may generally be 0.1% by mass, and preferably 0.2% by mass.

The ceramic used for the first honeycomb structure 20 may further contain components that are conventionally added to PTC materials, in addition to the above crystal grains. Such components include additives such as shifters, property modifiers, metal oxides and conductor powders, as well as unavoidable impurities.

In terms of reduction of the environmental load, it is desirable that the ceramics used for the honeycomb structure 20 are substantially free of lead (Pb). Specifically, the ceramics preferably have a Pb content of 0.01% by mass or less, and more preferably 0.001% by mass or less, and still more preferably 0% by mass. The lower Pb content can allow the air heated by contacting it with the ceramics to be safely applied to organisms such as humans, for example. In the ceramics, the Pb content is preferably less than 0.03% by mass, more preferably less than 0.01% by mass, and even more preferably 0% by mass, as converted to PbO. The lead content can be determined by, for example, X-ray fluorescence analysis, ICP-MS (inductively coupled plasma mass spectrometry), or the like.

It is preferable that the ceramics used for the first honeycomb structure 20 is substantially free of alkali metals that may affect the electrical resistance at room temperature. Specifically, the ceramics preferably have a content of the alkali metals of 0.01% by mass or less, and more preferably 0.001% by mass or less, and still more preferably 0% by mass. By controlling the content of the alkali metals to this range, the electrical resistance at room temperature can be stably reduced. The content of the alkali metals can be determined by, for example, X-ray fluorescence analysis, ICP-MS (inductively coupled plasma mass spectrometry), or the like.

From the viewpoint of the temperature required for desorbing CO₂ from the amine, the Curie point of the material making up the first honeycomb structure 20 is preferably 100°C or higher, more preferably 110°C or higher, and even more preferably 125°C or higher. The upper limit of the Curie point is preferably 150°C from the viewpoint of amine deterioration.

The Curie point of the material making up the first honeycomb structure 20 can be adjusted by the type and amount of the shifter added. For example, the Curie point of barium titanate (BaTIO₃) is about 120°C, but the Curie point can be shifted to the lower temperature side by substituting a part of Ba and Ti with one or more of Sr, Sn and Zr.

As used herein, the Curie point is measured by the following method. A sample is attached to a sample holder for measurement, mounted in a measuring tank (e.g., MINI-SUBZERO MC-810P, from ESPEC). A change in electrical resistance of the sample as a function of a temperature when the temperature is increased from 10 °C is measured using a DC resistance meter (e.g., Multimeter 3478A, from YHP). Based on an electrical resistance-temperature plot obtained by the measurement, a temperature at which the resistance value is twice the resistance value at room temperature (20 °C) is defined as the Curie point.

As will be described later with reference to the drawings, the gas adsorbent 27 may be present inside the outer peripheral wall 250, inside the partition walls 251, and/or inside the cells 251a. The gas adsorbent 27 present inside the cells 251a may be filled in the cells 251a or coated on the surfaces of partition walls 251.

The gas adsorbent 27 can contain at least one selected from the group consisting of nitrogen-containing compounds such as polyamines, polyethyleneimines, imidazolium salts, amine epoxy compounds, pyrrolidine, ethylenediamine, diethylenediamine, propylenediamine, poly-propyleneguanidine, and metaxylylenediamine; porous organic cages (POCs); polystyrene; metal-organic frameworks; metal oxides; graphene; activated carbon; nitrogen doped carbon; alkali compounds; carbonates; hydrogencarbonates; zeolites; amorphous alumina silicates; ionic liquids; and combinations thereof.

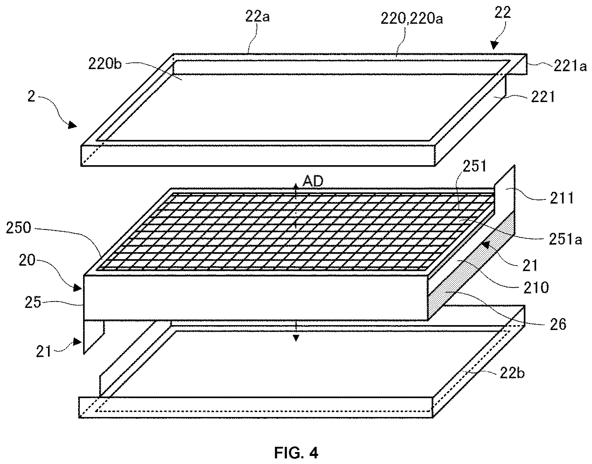

FIG. 4 is a perspective view illustrating a variation of the gas adsorption/desorption unit 2 in FIG. 2. As illustrated in FIG. 4, the electrode layers 26 may be disposed on the outer peripheral wall 250 of the honeycomb structure portion 25. The pair of electrode layers 26 may be disposed apart from each other in the circumferential direction of the honeycomb structure portion 25 so as to sandwich the central axis of the honeycomb structure portion 25 therebetween. The terminal body 210 of the electrode terminal 21 is disposed so as to come into contact with the electrode layer 26 disposed on the outer peripheral wall 250 of the honeycomb structure portion 25. The terminal body 210 may be a plate body that conforms to the outer surface shape of the outer peripheral wall 250. Otherwise, it is the same as the case where the electrode layers 26 are disposed at the end faces of the honeycomb structure portion 25.

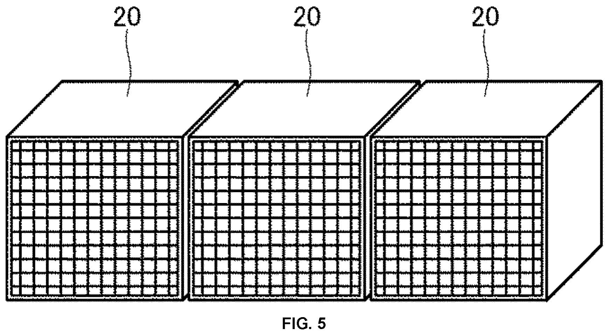

Next, FIG. 5 is a perspective view illustrating an example of an arrangement of the first honeycomb structure 20 in the gas adsorption/desorption unit 2 in FIG. 1. In FIG. 5, the electrode terminals 21 and the case 22 are not shown. The gas adsorption/desorption unit 2 may have only one first honeycomb structure 20, or it may have multiple first honeycomb structures 20 as illustrated in FIG. 5. FIG. 5 shows an embodiment in which three first honeycomb structures 20 are arranged in parallel. The electrode terminal 21 and the case 22 may be provided for each of the three first honeycomb structures 20, or one electrode terminal 21 and one case 22 may be provided so as to be across a plurality of first honeycomb structures 20.

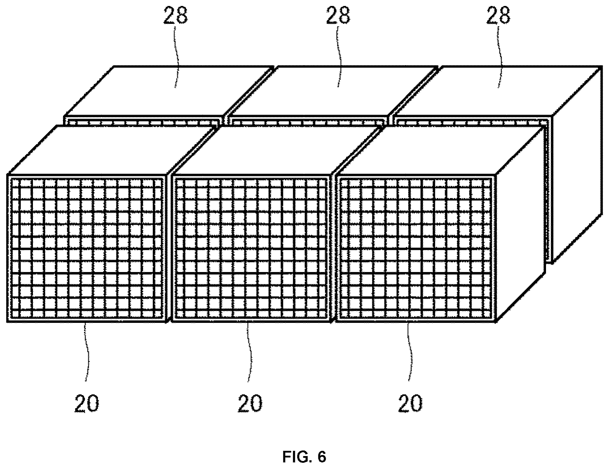

FIG. 6 is a perspective view illustrating a variation of the gas adsorption/desorption unit 2 in FIG. 5. As illustrated in FIG. 6, the gas adsorption/desorption unit 2 may further include one or more second honeycomb structures 28 provided on a downstream side of the one or more first honeycomb structures 20 in the flow direction of the gas 11 passing through the cells 251a of the one or more first honeycomb structures 20. The first honeycomb structure 20 may be referred to as the upstream honeycomb structure and the second honeycomb structure 28 as the downstream honeycomb structure. The one or more second honeycomb structures 28 may have at least one honeycomb structure portion 25 similar to the first honeycomb structure 20 as described above. At least one honeycomb structure portion 25 of the one or more second honeycomb structures 28 may also contain the gas adsorbent 27. By disposing the second honeycomb structure 28 downstream of the first honeycomb structure 20, the recovery efficiency of the gas 11 can be improved.

The second honeycomb structure 28 may be heated by electrical conduction as with the first honeycomb structure 20, but it may not necessarily be heated by electrical conduction. This is because the heat generated in the first honeycomb structure 20 can heat the second honeycomb structure 28 and its gas adsorbent 27. Therefore, the second honeycomb structure 28 may not have an electrode layer 26 or the electrode terminals 21 are not connected (to the electrode layer 26, even if it has the electrode layer 26). Further, even if the second honeycomb structure 28 has the electrode layer 26 and the electrode terminal 21 is connected to the electrode layer 26, the power source circuit 23 may not be connected to the electrode terminal 21. Furthermore, the second honeycomb structure 28 has the electrode layer 26, and the electrode terminal 21 is connected to the electrode layer 26, and the electrode terminal 21 may be further connected to the power source circuit 23, but power may not be supplied from the power source circuit 23 thereto.

At least one honeycomb structure portion 25 of the one or more second honeycomb structures 28 may be made of a material having a PTC property, as with the first honeycomb structure 20 as described above, but it may also be made of a material having an NTC property. The NTC property means a property of decreasing electrical resistance as temperature increases. The embodiment in which the honeycomb structure portion 25 of the second honeycomb structure 28 is configured to have the NTC property can be adopted particularly when the second honeycomb structure 28 is not heated by electrical conduction. Since there is no need for electrical conduction through the second honeycomb structure 28, the entire system can save power.

The material having the NTC property includes at least one selected from the group consisting of cordierite, silicon carbide, silicon, silica, and alumina. Examples of the material having the NTC property include cordierite, silicon carbide, aluminum titanate, silicon nitride, mullite, alumina, silica, silicon-silicon carbide-based composite materials, silicon carbide-cordierite-based composite materials, and in particular silicon-silicon carbide-based composite materials or sintered bodies mainly based on silicon carbide. As used herein, the term "silicon carbide-based" means that the outer peripheral wall 250 and the partition walls 251 contain silicon carbide in an amount of 50% by mass or more of the whole of the outer peripheral wall 250 and the partition walls 251. The phrase "the outer peripheral wall 250 and the partition wall 251 are mainly based on a silicon-silicon carbide-based composite material" means that the outer peripheral wall 250 and the partition walls 251 contain silicon-silicon carbide-based composite material (total mass) in an amount of 90% by mass or more of the whole of the outer peripheral wall 250 and the partition walls 251. Here, the silicon-silicon carbide-based composite material contains silicon carbide particles as aggregate and silicon as a binder that bonds the silicon carbide particles, and it is preferable that a plurality of silicon carbide particles are bonded by the silicon so as to form pores between the silicon carbide particles. Furthermore, the phrase "the outer peripheral wall 250 and the partition walls 251 are mainly based on silicon carbide" means that the outer peripheral wall 250 and the partition walls 251 contain silicon carbide (total mass) in an amount of 90% by mass or more of the whole of the outer peripheral wall 250 and the partition walls 251. The honeycomb structure portion 25 is preferably formed from at least one ceramic material selected from the group consisting of cordierite, silicon carbide, aluminum titanate, silicon nitride, mullite, alumina, silica, silicon-silicon carbide-based composite materials, silicon carbide-cordierite-based composite materials, and in particular, silicon-silicon carbide-based composite materials or sintered bodies mainly based on silicon carbide.

The gas adsorption/desorption device 1 may further include a gas adsorption member (not shown) that contains the gas adsorbent 27 and is other than that of the first honeycomb structure 20 and the second honeycomb structure 28. For example, a material that can be used as a member capable of maintaining its structure, such as a compressed gas adsorbent 27, can be used as the other gas adsorbing member. The other gas adsorbing member may be positioned between the plurality of first honeycomb structures 20. The gas adsorbing member may be positioned between the plurality of second honeycomb structures 28 and between the first honeycomb structure 20 and the second honeycomb structure 28. At least the heat generated in the first honeycomb structure 20 can also heat such other gas adsorbing member and its gas adsorbent 27. The efficiency of the gas 11 recovered can be improved by providing the other gas adsorbing member.

Returning to FIG. 1, the configuration other than the gas adsorption/desorption unit 2 is described. As illustrated in FIG. 1, the housing 3 contains the gas adsorption/desorption unit 2 therein. Although not limited, the housing 3 can be a cylindrical member with front and rear ends released. The gas adsorption/desorption unit 2 is positioned inside the housing 3 so that the end faces where the cells 251a open face the front and rear ends of the housing 3.

A fan 4 is used to feed the mixed gas 10 to the gas adsorption/desorption unit 2 in the housing 3. The fan 4 can be provided inside the housing 3, more specifically at the front end of the housing 3. The fan 4 may be provided outside of housing 3. The mixed gas 10 is discharged from the rear end of housing 3 after passing through the gas adsorption/desorption unit 2.

The damper 5 is for forming a sealed space 50 including the gas adsorption/desorption unit 2 inside the housing 3. The damper 5 may have a pair of opening/closing members 51 located on both sides of the gas adsorption/desorption unit 2. Although not limited, as shown in FIG. 1, each opening/closing member 51 may have an outer shape that fits to the internal shape of the housing 3 and may have a plurality of plates 52 that are rotatably disposed inside the housing 3. The plates 52 are rotated so that they overlap with each other or are adjacent to each other, thereby closing the flow path in the housing 3. Furthermore, the plates 52 are rotated to form a space between them, thereby opening the flow paths in the housing 3.

The water vapor feeder 6 is for feeding water vapor 60 to the sealed space 50 within the housing 3. The gas 11 adsorbed by the gas adsorption/desorption unit 2 is desorbed by the water vapor 60. Although not limited, the water vapor feeder 6 can be a boiler. The water vapor feeder 6 may have a tank 61 capable of feeding water 61a, a heater 62 for heating the water 61a in the tank 61 to generate water vapor 60, and a valve 63 provided between the tank 61 and the housing 3 for controlling the flow of water vapor 60 from the tank 61 to the housing 3.

The gas separator 7 is for separating the gas 11 from the water vapor 60. By cooling the water vapor 60 in the gas separator 7, the gas 11 can be separated from the water vapor 60. The gas separator 7 can also be called a cooling tower. The gas separator 7 may have a tank 71, a valve 72 provided between the tank 71 and the housing 3 for controlling the flow of the water vapor 60 from the housing 3 to the tank 71, and a heat exchanger 73 for cooling the water vapor 60 in the tank 71. The tank 71 stores the water 71a generated by cooling the water vapor 60 and the gas 11 separated from the water vapor 60. The tank 71 is configured to allow the water 71a collected in it to be discharged.

The vacuum pump 8 is connected to the gas separator 7 (more specifically, the tank 71). The vacuum pump 8 is for drawing out the gas 11 separated in the gas separator 7. A container (not shown) is connected to the vacuum pump 8, and the gas 11 can be collected in the container.

Next, the gas recovery method using the gas adsorption/desorption system 1 illustrated in FIG. 1 is described. The gas recovery method includes an adsorption step of adsorbing the gas 11, which is a part of components in the mixed gas 10, to the gas adsorption/desorption unit 2, and a desorption step of desorbing the gas 11 from the gas adsorption/desorption unit 2 and recovering the gas 11.

**In** the adsorption step, the damper 5 is opened and the mixed gas 10 is fed to the gas adsorption/desorption unit 2 by the fan 4. In this case, the gas 11 is adsorbed by the gas adsorbent 27 in the gas adsorption/desorption unit 2, and a proportion of the gas 11 is reduced or the mixed gas 10 that has removed the gas 11 is discharged from the rear end of the housing 3. **In** the adsorption step, the first honeycomb structure 20 (and the second honeycomb structure 28) may not subjected to electrical conduction, the valve 63 of the water vapor feeder 6 and the valve 72 of the gas separator 7 may be closed, and the vacuum pump 8 may be stopped.

The desorption step takes place after the adsorption step. In the desorption step, the fan 4 is stopped and damper 5 is closed to form the sealed space 50. Further, the first honeycomb structure 20 and its gas adsorbent 27 (as well as the second honeycomb structure 28 and its gas adsorbent 27) are heated by electrical conduction. Furthermore, the valve 63 of the water vapor feeder 6 is opened to introduce the water vapor 60 into the sealed space 50, and the gas 11 adsorbed by the gas adsorbent 27 is desorbed into the water vapor 60. During desorption of the gas 11, the first honeycomb structure 20 and its gas adsorbent 27 (as well as the second honeycomb structure 28 and its gas adsorbent 27) are uniformly heated to a predetermined temperature by electrical conduction, so that the gas 11 is efficiently desorbed. Furthermore, the valve 72 of the gas separator 7 is opened and the vacuum pump 8 is operated, so that the gas 11 separated from the water vapor 60 in the gas separator 7 is recovered through the vacuum pump 8.

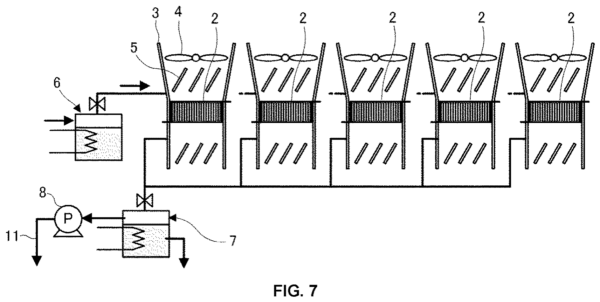

Next, FIG. 7 is an explanatory view illustrating a variation of the gas adsorption/desorption device 1 in FIG. 1. Although FIG. 1 illustrates the gas adsorption/desorption device 1 having one gas adsorption/desorption unit 2, the gas adsorption/desorption device 1 may have a plurality of gas adsorption/desorption units 2 as illustrated in FIG. 1. Although a plurality of gas adsorption/desorption units 2 may be arranged in series, a plurality of gas adsorption/desorption units 2 may be arranged in parallel to one another as shown in FIG. 7. Each gas adsorption/desorption unit 2 may be connected to its own water vapor feeder 6 and gas separator7, but at least two gas adsorption/desorption units 2 may be connected to the same water vapor feeder 6 and gas separator 7. While the desorption step is being carried out in part of the gas adsorption/desorption units 2 among the plurality of gas adsorption/desorption units 2, the adsorption step can be carried out in the other gas adsorption/desorption units 2. By sequentially changing the gas adsorption/desorption unit 2 performing the desorption step, the gas 11 can be continuously recovered. Generally, the adsorption step takes a longer time than the desorption step. The number of gas adsorption/desorption units 2 can be determined depending on the time difference between the adsorption and desorption steps.

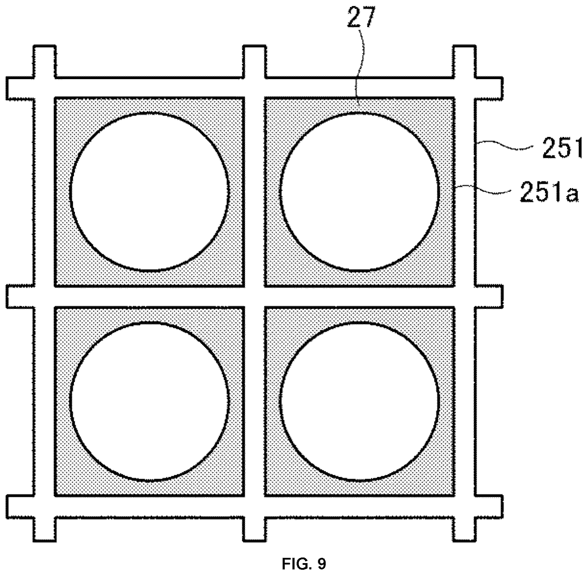

Next, FIG. 8 is an explanatory view illustrating a first example of a present mode of the gas adsorbent 27 in the first honeycomb structure 20 in FIG. 2, and FIG. 9 is a front view of the cells 241a in FIG. 8. As described above, the gas adsorbent 27 may be present inside the outer peripheral wall 250, inside the partition walls 251, and/or inside the cells 251a. Also, the gas adsorbent 27 present inside the cells 251a may be filled in the cells 251a or coated on the surfaces of partition walls 251. An example of the present mode of such a gas adsorbent 27 includes the mode shown in FIG. 8.

FIGS. 8 and 9 illustrates an embodiment in which the surfaces of the partition walls 251 are coated with the gas adsorbent 27. The coating of gas adsorbent 27 on the surfaces of the partition walls 251 allows the mixed gas 10 containing the gas 11 and the water vapor 60 (herein after referred to as the "gas 11 and the like") to more reliably contact the gas adsorbent 27, thereby improving the efficiency of adsorption and desorption of the gas 11. The gas adsorbent 27 on the surfaces of the partition walls 251 have any thickness, but the gas adsorbent 27 may have a significant thickness when the cells 251a is viewed from the front as shown in FIG. 9.

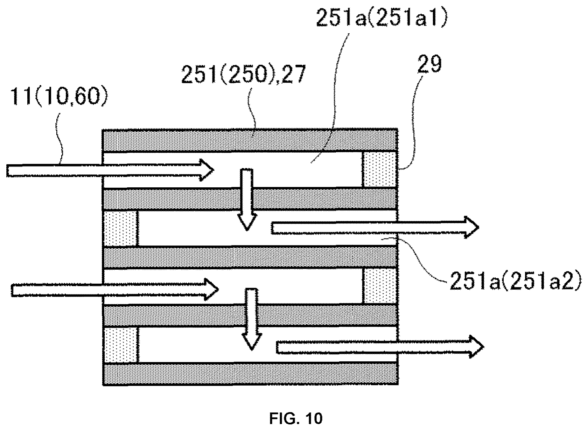

Next, FIG. 10 is an explanatory view illustrating a second example of a present mode of the gas adsorbent 27 in the first honeycomb structure 20 in FIG. 2. In the embodiment illustrated in FIG. 10, the honeycomb structure 25 is produced in a state where the gas adsorbent 27 is mixed with the ceramic material, and the gas adsorbent 27 is allowed to present inside the outer peripheral wall 250 and the partition walls 251. In the embodiment illustrated in FIG. 10, plugged portions 29 are formed at the ends of the cells 251a. The plugged portions 29 may be made of the same ceramic material as the first honeycomb structure 20. The cells 251a include first cells 251a1 plugged at the other end face, and second cells 251a2 plugged at one end face. The gas adsorption/desorption unit 2 according to this embodiment is configured so that the gas 11 and the like flowing into the first cells 251a1 from one end face passes through the partition walls 251 to reach the second cells 251a2, and then flows out from the other end face through the second cells 251a2. By adopting such an embodiment, the contact between the gas 11 and the gas adsorbent 27 increases, and the adsorption efficiency of the gas 11 can be improved.

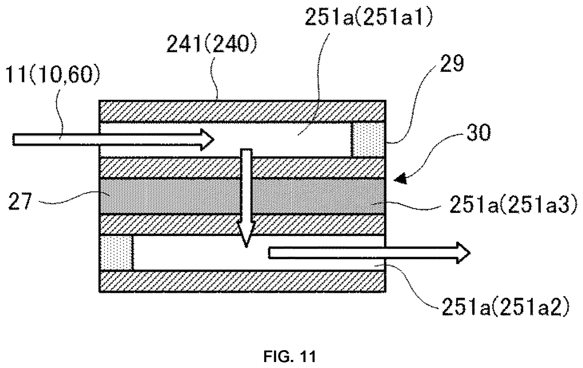

Next, FIG. 11 is an explanatory view illustrating a third example of a present mode of the gas adsorbent 27 in the first honeycomb structure 20 in FIG. 2. In the embodiment illustrated in FIG. 11, the gas adsorbent 27 is filled in some of the cells 251a. Further, the plugged portions 29 are formed in some of the other cells 251a. The plugged portions 29 may be made of the same ceramic material as the first honeycomb structure 20.

In other words, in the embodiment illustrated in FIG. 11, the cells 251a includes first cells 251a1 plugged at the other end face, second cells 251a2 plugged at one end face, and third cells 251a3 disposed between the first cells 251a1 and the second cells 251a2 and filled with the gas adsorbent 27. The gas adsorption/desorption unit 2 according to this embodiment is configured so that the gas 11 and the like flowing into the first cells 251a1 and the third cells 251a3 from one end face passes through the partition walls 251 to reach the second cells 251a2, and then flows out from the other end face through the second cells 251a2. In other words, the partition walls 251 and the third cells 251a3 are treated as apparent partition walls 30. By adopting such an embodiment, the contact between the gas 11 and the gas adsorbent 27 increases, and the adsorption efficiency of the gas 11 can be improved.

Although the present modes of the gas adsorbent 27 has been described using FIG. 8 to FIG. 11, these present modes of the gas adsorbent 27 can be combined in any desired manner. The present mode of the gas adsorbent 27 in the second honeycomb structure 28 is similar to that of the gas adsorbent 27 in the first honeycomb structure 20.

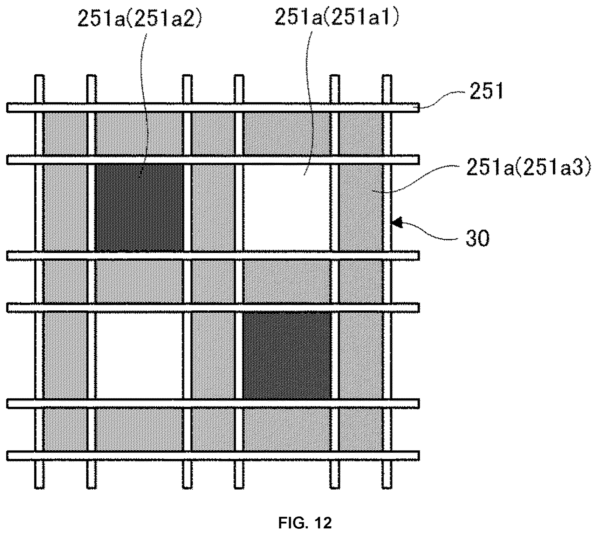

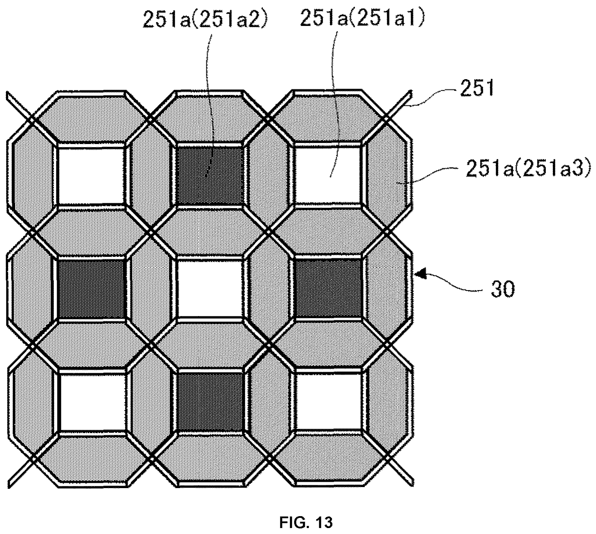

Next, FIG. 12 is a front view illustrating an example of the first honeycomb structure 20 for implementing the present mode of the gas adsorbent 27 in FIG. 11, and FIG. 13 is a front view illustrating another example of the first honeycomb structure 20 for implementing the present mode of the gas adsorbent 27 in FIG. 11. At the end face of the honeycomb structure portion 25 or in a cross section of the honeycomb structure portion 25 orthogonal to the extending direction of the cells 251a, the shapes of the first cells 251a1 and the second cells 251a2 and the shapes of the third cells 251a3 may be the same, but they may be different as shown in FIGS. 12 and 13.

As illustrated in FIG. 12, the third cells 251a3 may be formed to be narrower and/or smaller than the first cells 251a1 and the second cells 251a2. It is possible to form apparent rectangular partition walls 30 surrounding the rectangular first cells 251a1 and second cells 251a2. By adopting such an embodiment, the amount of the gas adsorbent 27 applied and the amount of the gas flowing into the cells 251a can be regulated to control the contact between the gas 11 and the gas adsorbent 27, and the adsorption efficiency of the gas 11 can be controlled.

As illustrated in FIG. 13, the first cells 251a1 and the second cells 251a2 may be rectangular, while the third cells 251a3 may be elongated hexagonal shaped. The elongated hexagonal third cells 251a3 can be arranged to surround the first cells 251a1 and the second cells 251a2. By adopting such an embodiment, the amount of the gas adsorbent 27 applied and the amount of the gas flowing into the cells 251a can be regulated to control the contact between the gas 11 and the gas adsorbent 27, and the adsorption efficiency of the gas 11 can be controlled.

While the preferred embodiments of the invention have been described above in detail with reference to the drawings, the present invention is not limited to such embodiments. It is obvious that a person skilled in the art to which this invention belongs can arrive at various variations or modifications in the scope of the technical idea recited in the claims, and it is understood that they also belong to the technical scope of this invention.

### Description of Reference Numerals

1: gas adsorption/desorption device
2: gas adsorption/desorption unit
20: first honeycomb structure
21: electrode terminal
23: power source circuit
25: honeycomb structure portion
250: outer peripheral wall
251: partition wall
251a: cell
251a1 : first cell
251a2 : second cell
251a3 : third cell
26: electrode layer
27: gas adsorbent
28: second honeycomb structure
29: plugged portion

## Claims

1. A gas adsorption/desorption unit comprising:
one or more first honeycomb structures including at least one honeycomb structure portion having an outer peripheral wall and partition walls provided on an inner side of the outer peripheral wall, the partition walls defining a plurality of cells each extending from one end face to other end face of the honeycomb structure portion to form a flow path, and a pair of electrode layers disposed on the outer peripheral wall or the end faces of the honeycomb structure portion; and
electrode terminals connected to the pair of electrode layers,
wherein at least one honeycomb structure portion of the one or more first honeycomb structures comprises a gas adsorbent and is made of a material having a PTC property.

2. The gas adsorption/desorption unit according to claim 1, wherein the gas adsorption/desorption unit comprises the honeycomb structure portion, and further comprises one or more second honeycomb structures provided on a downstream side of the one or more first honeycomb structures in a flow direction of a gas passing through the cells of the one or more first honeycomb structures, and
Wherein the at least one honeycomb structure portion of the one or more second honeycomb structures comprises a gas adsorbent.

3. The gas adsorption/desorption unit according to claim 2, wherein the one or more second honeycomb structures do not have electrode layers or do not connect electrode terminals.

4. The gas adsorption/desorption unit according to claim 2, wherein the at least one honeycomb structure portion of the one or more second honeycomb structures is made of a material having an NTC property.

5. The gas adsorption/desorption unit according to claim 1, wherein the material having the PTC property comprises barium titanate.

6. The gas adsorption/desorption unit according to claim 4, wherein the material having the NTC property comprises at least one selected from the group of cordierite, silicon carbide, silicon, silicic acid and alumina.

7. The gas adsorption/desorption unit according to claim 1, wherein the gas adsorbent comprises at least one selected from the group consisting of nitrogen-containing compounds, porous organic cages, polystyrene, metal-organic frameworks, metal oxides, graphene, activated carbon, nitrogen doped carbon, alkali compounds, carbonates, bicarbonates, zeolite, amorphous alumina silicates, ionic liquids, or combinations thereof.

8. The gas adsorption/desorption unit according to any one of claims 1 to 7, wherein the gas adsorbent is present inside the outer peripheral wall, inside the partition walls and/or inside the cells.

9. The gas adsorption/desorption unit according to claim 8,
wherein the gas adsorbent is present inside the cells,
wherein the cells comprise: first cells plugged at the other end face; second cells plugged at the one end face; and third cells provided between the first cells and the second cells and filled with the gas adsorbent, and
wherein the gas adsorption/desorption unit is configured so that the gas flowing into the first cells from the one end face passes through the partition walls and the third cells to reach the second cells, and flows out through the second cells from the other end face.

10. A gas adsorption/desorption device comprising:
the gas adsorption/desorption unit according to any one of claims 1 to 7; and
a power source circuit connected to the electrode terminals,
wherein the gas adsorption/desorption device is configured to be able to heat the honeycomb structure by passing a current through the electrode terminals when desorbing a gas from the gas adsorbent.

11. The gas adsorption/desorption device according to claim 10, wherein the gas adsorption/desorption device comprises a gas adsorbent, and further comprises a gas adsorption member provided between the first honeycomb structures.
